# EUROPÄISCHE PATENTSCHRIFT

(11) **EP 1 516 528 B1**
(45) Veröffentlichungstag und Bekanntmachung des Hinweises auf die Patenterteilung: **29.11.2006**
(21) Anmeldenummer: 04104220.1
(22) Anmeldetag: 02.09.2004
(51) Int. Cl.: A01F 15/10

(54) **Ballenpresse und Verfahren**
Baling press and process
Presse à balles et procédé

(30) Priorität: 19.09.2003 DE 10343386
(43) Veröffentlichungstag der Anmeldung: 23.03.2005
(73) Patentinhaber: DEERE & COMPANY, Moline, Illinois 61265-8098 (US)
(72) Erfinder: Dubois, Jean-Yves, 70100, Cresancey (FR)
(74) Vertreter: Magin, Ludwig Bernhard

(56) Entgegenhaltungen:
- DE-B- 1 214 138
- GB-A- 1 600 443
- NL-A- 7 807 102

## Beschreibung

Die Erfindung betrifft eine Ballenpresse mit einem quaderförmigen Pressraum, in dem ein Presskolben beweglich aufgenommen wird, und mit einem Zufuhrkanal mit einer Verdichtergabel zur Verdichtung von Gut in dem Zufuhrkanal und einer beweglich angeordneten Ladegabel zum Einbringen des verdichteten Ernteguts in den Pressraum durch einen Guteinlass, die wenigstens in einer ersten Stellung gehalten werden kann, in der sie den Guteinlass zumindest im Wesentlichen verschließt, sowie ein Verfahren zum Betrieb einer derartigen Ballenpresse.

Die EP-A1-1 306 002 zeigt eine Ballenpresse mit einem quaderförmigen Pressraum, in dem ein Presskolben beweglich angeordnet ist. Das Pressgut wird dem Pressraum durch einen Pressguteinlass zugeführt, welcher während einer Vorverdichtung des Erntegutes in einem Zufuhrkanal durch eine Rückhaltegabel verschlossen wird.

Die DD-A-272 983 zeigt ein alternatives Konzept einer Ballenpresse, wobei hier mehrere, kontinuierlich arbeitende Verdichtergabeln vorgesehen sind, welche gleichzeitig als Ladegabeln dienen und welche mechanisch mit dem Presskolben derart verbunden sind, dass der Presskolben selbst den Pressguteinlass während der Vorverdichtung des Pressgutes in dem Zufuhrkanal verschließt.

Die DE-B-1 214 138 zeigt eine Vorrichtung zum Dosieren von faserigem Gut, die einer Ballenpresse vorgeschaltet ist, bestehend aus einem in einem Presskammer mündenden Kanal und einer Speiseeinrichtung am Ausgang des Kanals, die etwa nebeneinander liegende Greifer aufweist.

Die GB-A-1 600 443 zeigt eine Ballenpresse zur Herstellung von Quaderballen, bei der in einem Zufuhrkanal eine Verdichter- und eine Ladegabel vorgesehen sind. Die Ladegabel fördert sich in dem Zufuhrkanal befindendes Erntegut in einen Pressraum der Ballenpresse und verschließt den Zufuhrkanal gegenüber dem Pressraum während des Presshubes.

Das der Erfindung zugrunde liegende Problem wird in dem aufwändigen Aufbau derartiger Ballenpressen gesehen. Ein weiteres Problem ist die Erhaltung möglicht gleichmäßigen Ballen.

Diese Probleme werden erfindungsgemäß durch die Lehre der Patentansprüche 1 bzw. 11 gelöst, wobei in den weiteren Patentansprüchen Merkmale aufgeführt sind, die die Lösung in vorteilhafter Weise weiterentwickeln.

Auf diese Weise erfüllt die Ladegabel der Ballenpresse eine Doppelfunktion, wodurch der Aufbau der Ballenpresse vereinfacht wird. Die Ladegabel dient sowohl dazu, das durch die Verdichtergabel in dem Zufuhrkanal vorverdichtete Erntegut durch den Guteinlass in den Pressraum zu stopfen, als auch den Guteinlass während einer Vorverdichtung des Pressgutes durch die Verdichtergabel zu verschließen. Es kann somit auf die Verwendung einer Rückhaltegabel, welche das Pressgut während der Vorverdichtung daran hindert, in den Pressraum einzutreten, verzichtet werden. Darüber hinaus ist es nicht notwendig, dass sich der Presskolben während der Vorverdichtung in einer ausgefahrenen, den Guteinlass verschließenden Stellung befindet. Dies ermöglicht eine von der Verdichtergabel unabhängige Bewegung des Presskolbens, welcher beispielsweise nur dann einen Verdichtungshub ausführt, wenn durch die Ladegabel eine entsprechende Portion vorverdichtetes Erntegut in den Pressraum hinein gestopft wurde. Die Stellung der Ladegabel wird zumindest in Abhängigkeit von der Pressdichte des Pressgutes in dem Zufuhrkanal bestimmt, so dass sichergestellt wird, dass das Pressgut in dem Zufuhrkanal immer die gleiche Dichte hat, wodurch einheitliche Ballen gebildet werden.

Gibt die Ladegabel den Guteinlass bei Erreichen einer bestimmten Pressdichte in dem Zufuhrkanal oder eines anderen Parameters frei, so kann in dem Zufuhrkanal angesammeltes Pressgut in den Pressraum eingebracht bzw. vorzugsweise durch die Ladegabel in den Pressraum verbracht bzw. gestopft werden.

In dem Zufuhrkanal können Mittel zur Bestimmung der Pressgutdichte in dem Zufuhrkanal vorgesehen sein. Die Mittel können beispielsweise in der Art einer federbelasteten Klappe, welche an einer Kanalwand vorgesehen ist oder auch einen Bestandteil derselben bildet, ausgebildet sein, welche in Abhängigkeit von der Pressgutdichte gegen die Wirkung einer Feder oder allgemein eines Kraftspeichers verschwenkt und mit einem Sensor beispielsweise in der Art eines Kontaktschalters etc. zusammenwirkt. Es ist aber auch die Verwendung anderer Sensorarten denkbar, welche beispielsweise auch direkt mit dem Pressgut zusammenwirken können.

Es kann vorgesehen sein, dass die Zufuhrgabel, insbesondere quer zur Gutflussrichtung in dem Zufuhrkanal, verschwenkt wird. Ein besonders kompakte Bauform ergibt sich aber, wenn die Ladegabel zur Freigabe des Guteinlasses zurückgezogen bzw. aus dem Zufuhrkanal herausgezogen wird.

Um das Pressgut von dem Zufuhrkanal in den Pressraum zu fördern bzw. in diesen zu stopfen, kann die Ladegabel, nachdem sie aus dem Zufuhrkanal zurückgezogen wurde, stromabwärts in einer zweiten Stellung erneut in den Zufuhrkanal eintreten, und sich im Anschluss wieder in Richtung des Guteinlasses also zurück in ihre Ausgangsstellung bzw. ihre erste Stellung bewegen.

Es kann auch vorgesehen sein, dass die Ladegabel zumindest eine weitere Stellung in dem Zufuhrkanal einnehmen kann bzw. in einer Stellung gehalten werden kann, welche zwischen der ersten Stellung und der zweiten Stellung angeordnet ist. Auf diese Weise kann eine gleichmäßigere Verdichtung des Gutes in dem Zufuhrkanal erzielt werden, indem zuerst eine Verdichtung des Gutes gegenüber der in der erste Stellung angeordneten Ladegabel und beispielsweise nach Zufuhr einer vorgegebenen Gutmenge, nach Ablauf einer bestimmten Zeit oder Erreichen einer vorgegebenen Pressgutdichte etc. eine weitere Verdichtung des Pressgutes gegenüber der in die weitere Stellung gebrachten bzw. in dieser gehaltenen Ladegabel erfolgen.

Presskolben, Ladegabel und Verdichtergabel können zumindest teilweise in konventioneller Weise mechanisch verbunden sein. Um unabhängige Bewegungsabläufe der Bauteile der Ballenpresse zu ermöglichen bzw. um Bewegungsabläufe zu ermöglichen, welche von Vorgabegrößen, wie beispielsweise der Pressgutdichte in dem Zufuhrkanal, abhängig sind, kann die Ballenpresse eine Steuerung oder eine Regelung aufweisen, welche die Bewegung bzw. die Stellung des Presskolbens, der Ladegabel und/oder der Verdichtergabel bestimmt. Eine derartige Steuerung oder Regelung kann an der Ballenpresse vorgesehen sein. Es ist aber auch eine Verbindung mit einer an einer Zugmaschine, wie beispielsweise einem Ackerschlepper, vorgesehenen Steuerung bzw. Regelung denkbar. Es kann sich beispielsweise um einen Mikroprozessor handeln bzw. die Steuerung oder Regelung kann einen solchen aufweisen.

Eine derartige Steuerung bzw. Regelung kann mit einem oder mehreren an der Ballenpresse vorgesehenen Motoren zusammenwirken, welche die Bewegung der Ladegabel, der Verdichtergabel und/oder des Presskolbens oder auch die Funktion anderer Bauteile der Ballenpresse bestimmen. Bei diesen Motoren kann es sich beispielsweise um Elektromotoren, beispielsweise in der Art von Stellmotoren, handeln. Eine besonders robuste Ausführung wird aber durch die Verwendung von Hydraulikmotoren ermöglicht, welche vorzugsweise durch eine zentrale Druckquelle mit Hydraulikdruck beaufschlagt werden.

Weist der Ladegabelzusammenbau wenigstens einen derartigen Motor auf, so kann dieser mit der Ladegabel in Verbindung stehen, um diese zu bewegen. Bei der Bewegung der Ladegabel handelt es sich vorzugsweise um eine Bewegung in Längsrichtung, durch welche die Ladegabel in wenigstens eine ausgefahrene und eine zurückgezogene Stellung gebracht werden kann.

Der Ladegabelzusammenbau kann darüber hinaus einen zweiten Motor aufweisen, der wiederum insbesondere als ein Hydraulikmotor ausgeführt sein kann, welcher die Ladegabel entlang einer dem Zufuhrkanal folgenden Bahn, insbesondere einer Kurvenbahn bewegt. Hierzu kann der zweite Hydraulikmotor auf den ersten Motor wirken, welcher beispielsweise schwenkbar mit der Ballenpresse bzw. mit einem Rahmen der Ballenpresse verbunden ist.

Eine derartige Ballenpresse kann derart betrieben werden, dass die Ladegabel aus ihrer Ausgangsstellung, in der sie den Guteinlass verschließt, zurückgezogen wird, um in einer stromabwärts gelegenen Stellung wieder in den Zufuhrkanal eingebracht und entlang des Zufuhrkanals auf den Guteinlass zu und bis an diesen heran bewegt zu werden. Das Zurückziehen der Ladegabel kann beispielsweise zeitgesteuert erfolgen. Vorzugsweise wird die Ladegabel aber in Abhängigkeit von der Gutdichte in dem Zufuhrkanal derart gesteuert, dass sie bei einem Erreichen einer vorgegebenen Pressgutdichte bzw. eines vorgegebenen Drucks in dem Zufuhrkanal den Guteinlass freigibt und stromabwärts wiederum in den Zufuhrkanal eintritt, um sich in Richtung des Guteinlasses zu bewegen, um auf diese Weise das in dem Zufuhrkanal befindliche Pressgut in den Pressraum einzubringen bzw. in diesen hineinzustopfen.

Wird die Ladegabel nach dem Zurückziehen aus dem Zufuhrkanal an wenigstens einer weiteren zwischen der Ausgangsstellung und der stromabwärts gelegenen Stellung in den Zufuhrkanal eingebracht oder auch entlang des Zufuhrkanals aus der zweiten oder einer stromabwärts gelegenen Stellung in diese weitere Stellung gebracht bzw. in einer solchen Stellung gehalten, so kann eine besonders gleichmäßige Pressgutdichte erzielt werden. Das Pressgut wird durch die Verdichtergabel in den Zufuhrkanal eingebracht und gegenüber der sich in der weiteren Stellung befindenden Ladegabel verdichtet. Die Ladegabel verbleibt in dieser Stellung, bis wiederum eine vorbestimmte Pressgutdichte in dem Zufuhrkanal erreicht ist oder auch eine bestimmte Zeit vergangen oder eine vorgegebene Gutmenge zugeführt wurde etc., um dann erneut zurückgezogen zu werden und in der stromabwärts gelegenen Stellung in den Zufuhrkanal einzutreten, um das Pressgut in den Pressraum zu fördern bzw. zu stopfen. Hierbei handelt es sich um eine selbständige Erfindung, welche auch ohne die zuvor beschriebenen Merkmale, beispielsweise auch an einer konventionellen eine Rückhaltegabel o.ä. aufweisenden Ballenpresse, eingesetzt werden kann.

Es kann darüber hinaus vorgesehen sein, dass die Ladegabel, wenn sie in einer weiteren Stellung in den Zufuhrkanal eingebracht wurde, in Richtung des Guteinlasses bewegt wird, um das durch die Verdichtergabel vorverdichtete Pressgut in dem Zufuhrkanal zusätzlich zusammenzupressen.

In der Zeichnung ist ein nachfolgend näher beschriebenes Ausführungsbeispiel der Erfindung dargestellt. Es zeigt:
- Fig. 1: eine erfindungsgemäße Ballenpresse in Seitenansicht und schematischer Darstellung und
- Fig. 2 - 5: vergrößerte Ansichten eines Zufuhrkanals der Ballenpresse mit einer Ladegabel in unterschiedlichen Stellungen.

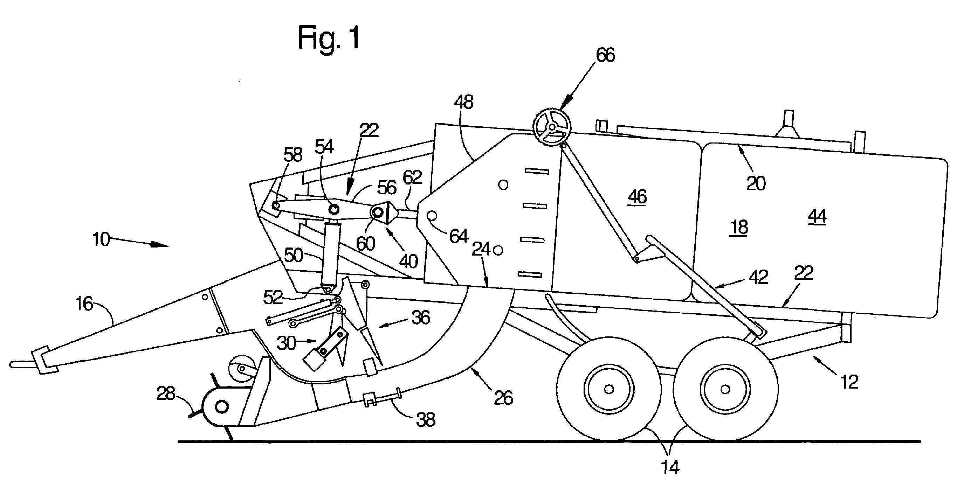

In Figur 1 ist eine Ballenpresse 10 in der Art einer Großballenpresse zum Herstellen quaderförmiger Ballen gezeigt, die einen Rahmen 12 aufweist, der auf Bodenstützrädern 14 in Tandemanordnung abgestützt ist. An den Rahmen 12 ist eine Deichsel 16 angeschlossen, welche sich von diesem aus nach vorn erstreckt und so ausgebildet ist, dass sie an ein Zugfahrzeug, wie einen nicht gezeigten Ackerschlepper, angeschlossen werden kann, der mit einer Zapfwelle ausgerüstet ist, um Leistung zum Antreiben verschiedener angetriebener Komponenten der Ballenpresse 10 zu liefern. Ein Pressraum 18 oder eine Kammer von rechteckförmigem Querschnitt wird teilweise von einem Gehäuseoberteil 20 und einem Gehäuseunterteil 22 gebildet, wobei der Gehäuseunterteil 22 mit einem Guteinlass 24 versehen ist, an den ein gekrümmter Zufuhrkanal 26 angeschlossen ist, der als ein Vorpressraum dient, wie dies nachfolgend beschrieben wird. Eine Aufnahmevorrichtung 28 in der Art einer Pick-up und mit einer zur Mitte fördernden Schnecke ist vor dem Zufuhrkanal 26 angeordnet, um ein Schwad von Erntegut vom Boden aufzuheben und es an eine Verdichtergabel 30 abzugeben, die dazu dient, Erntegut in dem Zufuhrkanal 26 zu verdichten, bis sich eine Ladung von vorgewählter Dichte in dem Zufuhrkanal 26 angesammelt hat und mittels eines Ladegabelzusammenbaus 36 über den Guteinlass 24 in den Pressraum 18 hineingestopft wird. An einer vorderen unteren Stelle des Zufuhrkanals 26 ist eine federbelastete Klappe bzw. ein Mittel 38 schwenkbar montiert, das in Abhängigkeit von sich in dem Zufuhrkanal 26 befindlichem Erntegut schwenkt, und anzeigt, dass eine gewünschte Pressgutdichte in dem Zufuhrkanal 26 erreicht ist, um die Bestromung eines elektrischen Steuerkreislaufs (nicht gezeigt) zu bewirken, der entsprechende Antriebsverbindungen herstellt, die den Ladegabelzusammenbau 36 derart aktiviert, dass er die Ladung des Ernteguts in den Pressraum 18 bewegen kann. Auf die Funktion des Ladegabelzusammenbaus 36 wird im Folgenden noch genauer eingegangen.

Wenn die Ladung des Ernteguts in den Pressraum 18 eingebracht wurde, wird ein Kolbenmechanismus 40, der vor dem Rahmen 12 angeordnet ist, in einer gesteuerten Reihenfolge nach dem Ladegabelzusammenbau 36 betätigt, um das Erntegut nach hinten in den Pressraum 18 zu bewegen, wo es in einem Stapel verdichtet wird, wie dies im Stand der Technik gut bekannt ist. Nachdem der Stapel von verdichtetem Material eine vorgewählte Länge erreicht hat, wird ein Nadelzusammenbau 42 zum Liefern von Bindegarn, der mehrere gekrümmte Nadeln enthält, betätigt, um mehrere Garnstränge einer entsprechenden Anzahl nicht gezeigter Knoter zuzuführen, die so wirken, dass sie Garnlängen um die vorgewählte Länge der Stapel legen, um einen Ballen 44 zu bilden, der zum Entladen fertig ist, was dann geschieht, wenn er von einem Ballenteil 46 aus dem rückwärtigen Endbereich des Pressraums 18 herausgedrückt wird, wenn er in seiner Länge zunimmt, weil neue Ladungen von Erntegut in den Pressraum 18 gestopft werden.

Mit Bezug auf die Einzelheiten des Kolbenmechanismus 40 ist zu erkennen, dass letzterer einen Presskolben 48 enthält, der für eine hin- und hergehende Bewegung in dem Pressraum 18 zwischen einer zurückgezogenen Stellung vor dem Guteinlass 24 und einer ausgefahrenen Stellung über dem Guteinlass 24 (sh. Figur 1) angeordnet ist. Diese Bewegung des Presskolbens 48 hat zum Ergebnis, dass Ladungen von Erntegut, die aus dem Zufuhrkanal 26 in den Pressraum 18 eingeführt werden, gegen einen Stapel von Erntegut verdichtet werden, was einen teilweise gebildeten Ballenteil 46 und/oder den kompletten Ballen 44 einschließt. Der Kolbenmechanismus 40 enthält weiterhin einen als aus- und einfahrbare Betätigungsvorrichtung ausgebildeten Antrieb 50, der hier als eine doppeltwirkende Hydraulikzylinder-KolbenEinheit dargestellt ist, deren Zylinderende mit einem Bolzen 52 schwenkbar an den Rahmen 12 an einer Stelle oberhalb der Verdichtergabel 30 verankert ist. Das kolbenseitige Ende des Antriebs 50 ist an einer Verbindungsstelle 54, etwa mit einem Bolzen, an einer Stelle zwischen gegenüberliegenden Enden eines als Kurbelarm dienenden ersten Lenkers 56 angeschlossen, dessen vorderer Endbereich an einer Lagerstelle 58 schwenkbar an den Rahmen 12 angeschlossen ist. Ein rückwärtiger Endbereich des ersten Lenkers 56 ist in einer Lagerstelle 60, etwa mit einem Bolzen, an einen vorderen Endbereich eines zweiten als Pleuelstange funktionierenden Lenkers 62 angeschlossen, dessen rückwärtiger Endbereich in einer Lagerstelle 64, etwa mittels eines Bolzens mit dem Presskolben 48 verbunden ist. Es wird hier darauf hingewiesen, dass die verbindenden Bolzen der Lagerstellen 58 und 64 entlang einer Linie von Zentren angeordnet sind, die entlang oder ungefähr entlang einer mittigen Längsachse des Pressraums 18 liegt. Dies hat zum Ergebnis, dass die Reaktionskraft des Ernteguts, das auf den Presskolben 48 wirkt, im Wesentlichen von dem Antrieb 50 genommen wird, wenn sich der erste und der zweite Lenker 56 und 62 entlang einer Linie befinden, wie dies der Fall ist, wenn sich der Presskolben 48 in seiner rückwärtigen Endstellung befindet. Es wird weiterhin darauf hingewiesen, dass die beiden Lenker 56 und 62 jeweils als ein Paar in der Querrichtung einen Abstand zueinander aufweisender Lenker ausgebildet sein könnten. Der Antrieb 50 würde dann an der Verbindungsstelle 54 (Bolzen) an einer Stelle zwischen dem Paar von Lenkern 56 angeschlossen werden, die den ersten Lenker 56 bilden. Es wird daher erkannt, dass der Presskolben 48 den Gleiter eines Gleitkurbelmechanismus bildet, der einen ersten Lenker 56 als Kurbelarm und einen zweiten Lenker 62 und den Lenker 64 als Pleuelstange enthält. Obwohl sich das von den Lenkern 56, 62 und 64 gebildete Gestänge nicht über eine Totpunktstellung hinausbewegt, könnte es als ein Kniemechanismus oder Kniegelenk bezeichnet werden. Wenn auch das bevorzugte Ausführungsbeispiel einen Antrieb 50 zeigt, der an den ersten Lenker 56 an einer Stelle zwischen gegenüberliegenden Enden des ersten Lenkers 56 angeschlossen ist, könnte des Weiteren der Antrieb an irgendeiner Stelle zwischen der Lagerstelle 58 und der Lagerstelle 64 angeschlossen werden, zum Beispiel könnte der Antrieb 50 an dem Bolzen 60 oder an einem Punkt entlang der Länge des zweiten Lenkers 62 angeschlossen werden, wobei sich der Betrieb noch in einer besseren Art als der der bekannten Vorrichtungen darstellt, bei denen die Betätigungsvorrichtung direkt an den Presskolben 48 angeschlossen ist.

Weitere Einzelheiten dieser Ballenpresse 10 sind in der EP-A2-0 940 072 beschrieben, deren Offenbarung hierin einbezogen wird. Es wird darauf hingewiesen, dass anstelle des dort beschriebenen speziellen Antriebs mit einem Hydraulikmotor ein herkömmlicher Kurbeltrieb verwendet werden könnte.

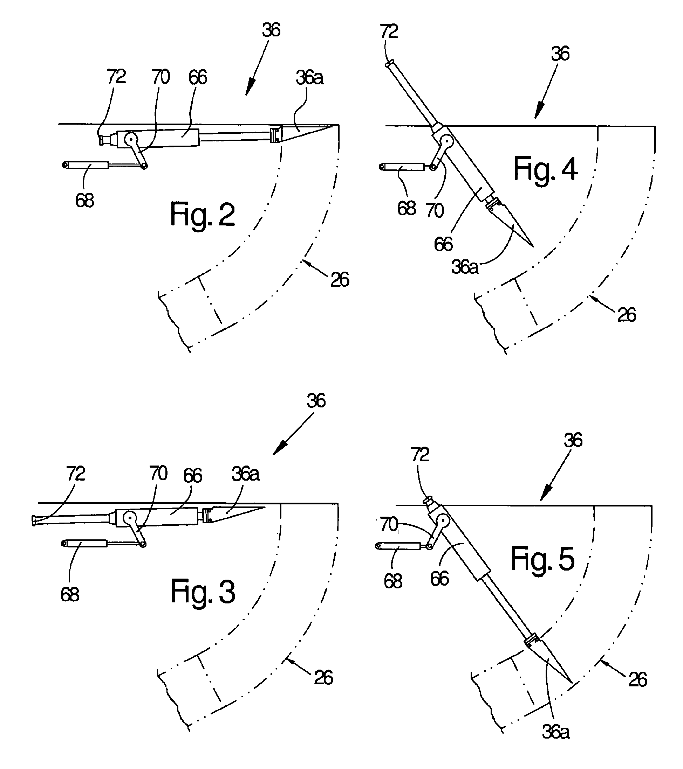

Es wird nun auf Figur 2 Bezug genommen in der der Zufuhrkanal 26 mit dem Ladegabelzusammenbau 36 in einer ersten Stellung vergrößert dargestellt ist. Der Ladegabelzusammenbau 36 weist eine Ladegabel 36a, einen ersten Hydraulikmotor bzw. einen ersten Motor 66 auf, welcher die Ladegabel 36a in Längsrichtung bewegen kann und einen zweiten Hydraulikmotor bzw. einen Motor 68 auf, welcher mit dem ersten Motor 66 über einen Hebel 70 derart verbunden ist, dass der Motor 66 durch ein Ein- bzw. Ausfahren des Motors 68 um einen Schwenkpunkt 72 verschwenkt.

Es werden nun auch die übrigen Figuren 3 bis 5 herangezogen, in denen der Ladegabelzusammenbau 36 in unterschiedlichen Stellungen gezeigt wird.

In Figur 2 befindet sich der Ladegabelzusammenbau 36 in seiner Ausgangsstellung. Der zweite Motor 68 ist ausgefahren, wodurch der erste Motor 66 durch den Hebel 70 in einer Stellung gehalten wird, in der er etwa parallel zu dem Gehäuseunterteil 22 ausgerichtet ist. Die Ladegabel 36a ist ausgefahren und befindet sich als Verlängerung des ersten Motors 66 in einer oberen Stellung, welche zumindest annähernd parallel zu dem Gehäuseunterteil 22 ist, und ist somit vor dem Guteinlass 24 angeordnet. Da die Ladegabel 36a in dieser Stellung den Guteinlass 24 zumindest im Wesentlichen verschließt, kann durch die in den Figuren 2 - 5 nicht gezeigte Verdichtergabel 30 in den Zufuhrkanal 26 eingebrachtes Pressgut in dem Zufuhrkanal 26 verdichtet werden.

Wird durch das Mittel 38 zur Ermittlung der Pressdichte in dem Zufuhrkanal ermittelt, dass die Pressdichte einen bestimmten Wert erreicht hat, so wird durch eine Steuerung (nicht gezeigt) der Ballenpresse 10 der Motor 66 derart angesteuert, dass er seine eingefahrene Stellung einnimmt, wodurch die Ladegabel 36a aus dem Zufuhrkanal 36 herausgezogen und die Guteinlassöffnung freigegeben wird (Fig. 3).

Daraufhin wird der erste Motor 66 durch den zweiten Motor 68 in die in Fig. 4 gezeigte Stellung und die Ladegabel gemäß der Darstellung in Figur 5 in eine stromabwärts des Guteinlasses 24 gelegene Stellung verschwenkt. Hier wird der Motor 66 ausgefahren, wodurch die Ladegabel 36 wieder in den Zufuhrkanal 26 eingreift.

Der zweite Motor 68 fährt nun wiederum aus und verschwenkt den ersten Motor 66 und die Ladegabel 36a entlang einer Kurvenbahn (siehe Pfeil) entlang dem Zufuhrkanal zurück in die in Figur 2 dargestellte Ausgangsstellung, wodurch die Ladegabel 36a das in dem Zufuhrkanal 26 enthaltene Pressgut in den Pressraum 18 fördert bzw. stopft. Der Guteinlass 24 ist nun wiederum verschlossen und der nächste Vorverdichtungsvorgang kann beginnen.

Es kann auch vorgesehen sein, dass die Motoren 66, 68 die Ladegabel 36a anstatt sie bei Erreichen einer vorgegebenen Pressdichte in die in Fig. 5 gezeigte Stellung zu bringen, bei Erreichen einer vorgegebenen ersten Pressdichte oder auch nach Ablauf einer vorgegebenen Zeit bzw. einer Anzahl von Zyklen der Verdichtergabel 30 in eine zwischen der Ausgangstellung (Fig. 2) und der in Fig. 5 gezeigten Stellung in den Zufuhrkanal 26 zu bringen bzw. in einer solchen Stellung zu halten. Hierbei handelt es sich um eine eigenständige Erfindung, welche auch unabhängig von den zuvor beschriebenen Merkmalen eingesetzt werden kann. Es kann hierbei auch vorgesehen sein, dass die Ladegabel 36a entsprechend in zwei oder mehreren Stellungen in den Zufuhrkanal 26 eingebracht bzw. gehalten werden kann. Durch die Ladegabel 36a wird der Zufuhrkanal 26 derart unterteilt, dass das Pressgut durch die Verdichtergabel zuerst gegenüber der in der erste Stellung angeordneten Ladegabel und im Anschluss gegenüber der in der weiteren Stellung angeordneten Ladegabel verdichtet wird. Auf diese Weise kann über die gesamte Erstreckung des Zufuhrkanals 26 eine gleichmäßige Pressgutdichte erzielt werden, wodurch das am Ende durch die Zufuhrgabel 36a in den Pressraum 18 eingebrachte Gut eine verbesserte Homogenität aufweist und die Ballenpresse 10 einen Ballen mit verbesserter Pressdichte erzeugt.

Darüber hinaus kann vorgesehen sein, dass die Ladegabel 36a, wenn sie erneut in den Zufuhrkanal 26a eingebracht wird, durch den zweiten Motor 68 ein Stück weit entlang des Zufuhrkanals 26 in Richtung des Pressguteinlasses 24 bewegt wird, um das Pressgut weiter zu verdichten.

## Patentansprüche

1. Ballenpresse (10) mit einem quaderförmigen Pressraum (18), in dem ein Presskolben (48) beweglich aufgenommen wird, und mit einem Zufuhrkanal (26) mit einer Verdichtergabel (30) zur Verdichtung von Gut in dem Zufuhrkanal (26) und einer beweglich angeordneten Ladegabel (36a) zum Einbringen des verdichteten Ernteguts in den Pressraum (18) durch einen Guteinlass (24), die wenigstens in einer ersten Stellung gehalten werden kann, in der sie den Guteinlass (24) zumindest im Wesentlichen verschließt, **dadurch gekennzeichnet, dass** die Stellung der Ladegabel (36a) zumindest in Abhängigkeit von der Pressdichte des Pressgutes in dem Zufuhrkanal (26) bestimmt wird.

2. Ballenpresse nach Anspruch 1, **dadurch gekennzeichnet, dass** die Ladegabel (36a) den Guteinlass (24) freigibt, wenn das Gut in dem Zufuhrkanal (26) eine bestimmte Pressdichte erreicht.

3. Ballenpresse nach einem oder mehreren der vorherigen Ansprüche, **gekennzeichnet durch** Mittel (38) zur Ermittlung der Pressgutdichte in dem Zufuhrkanal (26).

4. Ballenpresse nach einem oder mehreren der vorherigen Ansprüche, **dadurch gekennzeichnet, dass** die Ladegabel (36a) zum Freigeben des Guteinlasses (34) aus dem Zufuhrkanal (26) zurückgezogen wird.

5. Ballenpresse nach Anspruch 5, **dadurch gekennzeichnet, dass** die Ladegabel (36a) nachdem sie aus dem Zufuhrkanal (26) zurückgezogen wurde, in einer zweiten Stellung stromabwärts erneut in den Zufuhrkanal (26) eintritt, um das im Zufuhrkanal (26) verdichtete Gut in den Pressraum (18) zu fördern.

6. Ballenpresse nach einem oder mehreren der vorherigen Ansprüche, **dadurch gekennzeichnet, dass** die Ladegabel (36a) wenigstens eine weitere vorzugsweise zwischen der ersten und der zweiten Stellung gelegene Stellung in dem Zufuhrkanal (26) einnehmen bzw. in einer solchen Stellung gehalten werden kann.

7. Ballenpresse nach einem oder mehreren der vorherigen Ansprüche, **gekennzeichnet durch** eine Steuerung, welche die Bewegung bzw. die Stellung des Presskolbens (48), der Ladegabel (36a) und/oder der Verdichtergabel (30) bestimmt.

8. Ballenpresse nach einem oder mehreren der vorherigen Patentansprüche, **dadurch gekennzeichnet, dass** die Stellung bzw. die Bewegung der Ladegabel (36a), der Verdichtergabel (30) und/oder des Presskolbens (48) durch einen oder mehrere Motor(en) (66, 68), insbesondere in der Art von Hydraulikmotoren, bestimmt wird.

9. Ballenpresse nach Anspruch 8, **dadurch gekennzeichnet, dass** die Ladegabel (36a) mit einem Ladegabelzusammenbau (36) in Verbindung steht, welcher wenigstens einen Motor (66), insbesondere einen Hydraulikmotor, zur Bewegung der Ladegabel (36) in Längsrichtung aufweist.

10. Ballenpresse nach Anspruch 8 oder 9, **dadurch gekennzeichnet, dass** der Ladegabelzusammenbau (36) wenigstens einen zweiten Motor (68), insbesondere einen Hydraulikmotor, aufweist, der die Ladegabel (36a) entlang einer dem Zufuhrkanal (26) folgenden Bahn, insbesondere einer Kurvenbahn, bewegen kann.

11. Verfahren zum Betrieb einer Ballenpresse nach einem oder mehreren der vorherigen Ansprüche, **dadurch gekennzeichnet, dass** die Ladegabel (36a) aus ihrer den Pressguteinlass (34) verschließenden ersten Stellung zurückgezogen wird, um in einer stromabwärts gelegenen zweite Stellung wieder in den Zufuhrkanal (26) eingebracht und entlang des Zufuhrkanals (26) auf den Pressguteinlass (34) zu und bis an diesen heran bewegt zu werden.

12. Verfahren nach Anspruch 11, **dadurch gekennzeichnet, dass** die Ladegabel (36a) nach dem Zurückziehen aus dem Zufuhrkanal (26) an wenigstens einer weiteren vorzugsweise zwischen der ersten Stellung und der stromabwärts gelegenen zweiten Stellung in den Zufuhrkanal (26) eintritt und dort gehalten wird bis ein vorbestimmter Parameter, insbesondere eine vorgegebene Pressgutdichte in dem Zufuhrkanal (26), erreicht ist, um dann erneut zurückgezogen zu werden und in der stromabwärts gelegenen Stellung in den Zufuhrkanal (26) einzutreten.

13. Verfahren nach Anspruch 12, **dadurch gekennzeichnet, dass** die Ladegabel (36a) nachdem sie in der weiteren Stellung in den Zufuhrkanal (26) eingebracht wurde, in Richtung der Guteinlassöffnung (24) bewegt wird.

## Claims

1. A baler (10) with a compaction chamber (18) of parallelepiped form, in which a compressing ram (48) is movably received, and with a feed channel (26) with a compactor fork (30) for compacting crop in the feed channel (26) and a movably arranged loader fork (36a) for passing the compacted harvested crop into the compaction chamber (18) through a crop inlet (24), which loader fork can be held at least in a first position in which it at least substantially closes the crop inlet (24), **characterized in that** the position of the loader fork (36a) is determined at least in dependence on the compaction density of the compacted crop in the feed channel (26).

2. A baler according to claim 1, **characterized in that** the loader fork (36a) frees the crop inlet (24) when the crop in the feed channel (26) attains a specific compaction density.

3. A baler according to one or more of the preceding claims, **characterized by** means (38) for determining the compaction density in the feed channel (26).

4. A baler according to one or more of the preceding claims, **characterized in that** the loader fork (36a) is withdrawn from the feed channel to free the crop inlet (34).

5. A baler according to claim 5, **characterized in that** the loader fork (36a) reenters the feed channel (26) after it has been withdrawn from the feed channel (26), at a second, downstream position, in order to feed the crop compacted in the feed channel (26) into the compaction chamber (18).

6. A baler according to one or more of the preceding claims, **characterized in that** the loader fork (36a) can assume a further position in the feed channel (26), preferably between the first and second positions, or be retained in such a position.

7. A baler according to one or more of the preceding claims, **characterized by** a controller which determines the movement or position of the compressing ram (48), the loader fork (36a) and/or the compactor fork (30).

8. A baler according to one or more of the preceding claims, **characterized in that** the position or movement of the loader fork (36a), the compactor fork (30) and/or the compressing ram (48) is determined by one or more motors (66, 68), especially in the nature of hydraulic motors.

9. A baler according to claim 8, **characterized in that** the loader fork (36a) is coupled to a loader fork assembly (36) which comprises at least one motor (66), especially a hydraulic motor, for moving the loader fork (36) in the longitudinal direction.

10. A baler according to claim 8 or 9, **characterized in that** the loader fork assembly (36) comprises at least one second motor (68), especially a hydraulic motor, which can move the loader fork (36a) along a path following the feed channel (26), especially a curved path.

11. A method of operating a baler according to one or more of the preceding claims, **characterized in that** the loader fork (36a) is withdrawn from its first position closing the compaction crop inlet (24), in order to be brought at a downstream second position into the feed channel (26) again and to be moved towards the compaction crop inlet (24) and up to this.

12. A method according to claim 11, **characterized in that** the loader fork (36a), after withdrawal from the feed channel (26), enters into the feed channel (26) at at least one further position preferably located between the first position and the downstream second position and is retained there until a predetermined parameter, especially a predetermined compaction density is attained in the feed channel (26), in order then to be withdrawn again and to enter into the feed channel (26) in the downstream position.

13. A method according to claim 12, **characterized in that** the loader fork (36a) is moved in the direction of the crop inlet opening (24) after it has been brought into the further position in the feed channel (26).

## Revendications

1. Presse à balles (10) comportant une chambre de formation de balles (18) parallélépipédique, dans laquelle est monté mobile un piston de pression (48), et un conduit d'admission (26) avec une fourche de compactage (30), destinée à compacter les végétaux dans le conduit d'admission (26) et une fourche de chargement (36a) montée mobile, qui est destinée à introduire les végétaux compactés dans la chambre de formation de balles (18) à travers une ouverture d'admission (24), et qui peut être maintenue dans au moins une première position, dans laquelle elle ferme au moins sensiblement l'ouverture d'admission (24), **caractérisée en ce que** la position de la fourche de chargement (36a) est déterminée au moins en fonction de la densité de compactage des végétaux compactés dans le conduit d'admission (26).

2. Presse à balles selon la revendication 1, **caractérisée en ce que** la fourche de chargement (36a) libère l'ouverture d'admission (24) lorsque les végétaux dans le conduit d'admission (26) ont atteint une densité de compactage déterminée.

3. Presse à balles selon une ou plusieurs des revendications précédentes, **caractérisée par** des moyens (38) destinés à déterminer la densité de compactage des végétaux dans le conduit d'admission (26).

4. Presse à balles selon une ou plusieurs des revendications précédentes, **caractérisée en ce que** la fourche de chargement (36a) est retirée hors du conduit d'admission (26) pour libérer l'ouverture d'admission (24).

5. Presse à balles selon la revendication 5, **caractérisée en ce que** la fourche de chargement (36a), une fois qu'elle a été retirée hors du conduit d'admission (26), est à nouveau introduite dans le conduit d'admission (26) dans une deuxième position en aval, afin de transporter les végétaux, compactés dans le conduit d'admission (26), dans la chambre de formation de balles (18).

6. Presse à balles selon une ou plusieurs des revendications précédentes, **caractérisée en ce que** la fourche de chargement (36a) peut être introduite dans le conduit d'admission (26) au moins dans une position supplémentaire, située entre la première et la deuxième position, et peut notamment être maintenue dans une telle position.

7. Presse à balles selon une ou plusieurs des revendications précédentes, **caractérisée par** une commande qui détermine le mouvement ou la position du piston de pression (48), de la fourche de chargement (36a) et/ou de la fourche de compactage (30).

8. Presse à balles selon une ou plusieurs des revendications précédentes, **caractérisée en ce que** la position ou le mouvement de la fourche de chargement (36a), de la fourche de compactage (30) et/ou du piston de pression (48) sont déterminés par un ou plusieurs moteurs (66, 68), en particulier sous la forme de moteurs hydrauliques.

9. Presse à balles selon la revendication 8, **caractérisée en ce que** la fourche de chargement (36a) est reliée à un groupe pour fourche de chargement (36), qui comporte au moins un moteur (66), en particulier un moteur hydraulique, destiné à déplacer la fourche de chargement (36a) dans le sens longitudinal.

10. Presse à balles selon la revendication 8 ou 9, **caractérisée en ce que** le groupe pour fourche de chargement (36) comporte au moins un deuxième moteur (68), en particulier un moteur hydraulique, qui peut déplacer la fourche de chargement (36a) le long d'une voie, en particulier une voie courbe, suivant le conduit d'admission (26).

11. Procédé d'utilisation d'une presse à balles selon une ou plusieurs des revendications précédentes, **caractérisé en ce que** la fourche de chargement (36a) est retirée hors de sa première position obturant l'ouverture d'admission (24) afin d'être introduite à nouveau dans une deuxième position, située en aval, dans le conduit d'admission (26) et être déplacée le long du conduit d'admission (26) vers l'ouverture d'admission (24) et jusqu'à celle-ci.

12. Procédé selon la revendication 11, **caractérisé en ce que** la fourche de chargement (36a), après son retrait hors du conduit d'admission (26), entre dans le conduit d'admission (26) dans au moins une position supplémentaire, située de préférence entre la première position et la deuxième position située en aval, et est maintenue dans cette position jusqu'à ce qu'un paramètre prédéterminé soit atteint, en particulier une densité de compactage déterminée des végétaux dans le conduit d'admission (26), afin d'être à nouveau retirée et entrer dans le conduit d'admission (26) dans la position située en aval.

13. Procédé selon la revendication 12, **caractérisé en ce que** la fourche de chargement (36a), après avoir été amenée dans le conduit d'admission (26) dans la position supplémentaire, est déplacée en direction de l'ouverture d'admission (24).
